# EUROPEAN PATENT SPECIFICATION

(11) **EP 4 270 554 B1**
(45) Date of publication and mention of the grant of the patent: **18.11.2026**
(21) Application number: 22746189.4
(22) Date of filing: 24.01.2022
(51) Int. Cl.: H01M 8/04119, B01D 63/02, B01D 63/08

(54) **FUEL CELL MEMBRANE HUMIDIFIER PREVENTING DAMAGE OF HUMIDIFICATION MEMBRANE**
BEFEUCHTER FÜR BRENNSTOFFZELLENMEMBRAN ZUR VERHINDERUNG DER BESCHÄDIGUNG DER BEFEUCHTUNGSMEMBRAN
HUMIDIFICATEUR À MEMBRANE DE PILE À COMBUSTIBLE EMPÊCHANT L'ENDOMMAGEMENT D'UNE MEMBRANE D'HUMIDIFICATION

(30) Priority: 29.01.2021 KR 20210013371
(43) Date of publication of application: 01.11.2023
(73) Proprietor: Kolon Industries, Inc., Seoul 07793 (KR)
(72) Inventor: YANG, Hyoung Mo, Seoul 07793 (KR); KIM, Kyoung Ju, Seoul 07793 (KR); AHN, Woong Jeon, Seoul 07793 (KR); KIM, In Ho, Seoul 07793 (KR)
(74) Representative: Vossius & Partner Patentanwälte Rechtsanwälte mbB
(86) International application number: PCT/KR2022/001258
(87) International publication number: WO 2022/164162

(56) References cited:
- JP-A- 2004 202 478
- JP-A- 2006 003 069
- JP-A- 2007 218 539
- JP-A- 2008 119 615
- KR-A- 20190 081 736
- KR-A- 20200 122 260
- US-A1- 2005 247 618
- US-A1- 2012 270 120
- US-A1- 2014 183 126
- US-B2- 8 308 943

## Description

### [Technical Field]

The present invention relates to a fuel cell membrane humidifier, and more particularly, to a fuel cell membrane humidifier capable of preventing a humidification membrane from being damaged due to pressure of an off-gas.

### [Background art]

Fuel cells are power generation cells that produce electricity through coupling between hydrogen and oxygen. The fuel cells have an advantage of being able to continuously produce electricity as long as the hydrogen and the oxygen are supplied, and having an efficiency that is about twice higher than an internal combustion engine because of no heat loss, unlike general chemical cells such as dry batteries or storage batteries.

Further, since chemical energy generated through coupling between the hydrogen and the oxygen is directly converted into electrical energy, emission of pollutants is reduced. Therefore, the fuel cells have an advantage of being environmentally friendly and being able to reduce concerns about resource depletion due to increased energy consumption.

These fuel cells are roughly classified into, for example, a polymer electrolyte membrane fuel cell (PEMFC), a phosphoric acid fuel cell (PAFC), a molten carbonate fuel cell (MCFC), a solid oxide fuel cell (SOFC), and an alkaline fuel cell (AFC) depending on a type of electrolyte used.

These fuel cells fundamentally operate according to the same principle, but have a difference in a type of fuel used, an operating temperature, a catalyst, an electrolyte, or the like. Among the cells, the polymer electrolyte membrane fuel cell (PEMFC) is known to be the most promising not only for small-scale stationary power generation equipment but also for transportation systems because the polymer electrolyte membrane fuel cell operates at a lower temperature than other fuel cells and can be miniaturized due to a high output density.

One of the most important factors in improving the performance of the polymer electrolyte membrane fuel cell (PEMFC) is to maintain moisture content by supplying a certain amount or more of moisture to a polymer electrolyte membrane (or proton exchange membrane: PEM) of a membrane electrode assembly (MEA). This is because the efficiency of power generation is rapidly degraded when the polymer electrolyte membrane is dried.

Examples of a method for humidifying the polymer electrolyte membrane include 1) a bubbler humidification scheme for filling a pressure-resistant container with water and then passing a target gas through a diffuser to supply moisture, 2) a direct injection scheme for calculating a moisture supply amount required for a fuel cell reaction and directly supplying moisture to a gas flow pipe through a solenoid valve, and 3) a humidification membrane scheme for supplying moisture to a fluidized gas layer using a polymer separation membrane.

Among these, the membrane humidification scheme for humidifying a polymer electrolyte membrane by providing water vapor to air supplied to the polymer electrolyte membrane using a membrane that selectively permeates only water vapor contained in an off-gas is advantageous in that a weight and size of a humidifier can be reduced.

A selective permeable membrane used in the membrane humidification scheme is preferably a hollow fiber membrane having a large permeable area per unit volume when a module is formed. That is, when a humidifier is manufactured using hollow fiber membranes, there are advantages that high integration of the hollow fiber membranes with a large contact surface area is possible so that a fuel cell can be sufficiently humidified even with a small capacity, low-cost materials can be used, and moisture and heat contained in an off-gas discharged with a high temperature from the fuel cell can be recovered and can be reused through the humidifier.

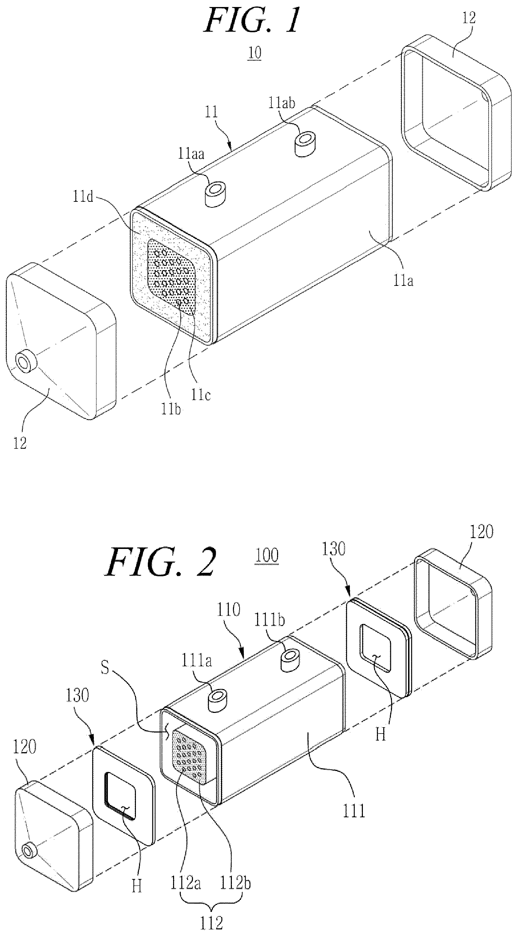

FIG. 1 is an exploded perspective view illustrating a fuel cell membrane humidifier according to the related art. As illustrated in FIG. 1, the fuel cell membrane humidifier 10 of the related art includes a humidification module 11 in which moisture exchange between air supplied from the outside and an off-gas discharged from a fuel cell stack (not illustrated) occurs, and caps 12 coupled to both ends of the humidification module 11.

One of the caps 12 supplies the air supplied from the outside to the humidification module 11, and the other supplies air humidified by the humidification module 11 to the fuel cell stack.

The humidification module 11 includes a mid-case 11a having an off-gas inlet 11aa and an off-gas outlet 11ab, and a plurality of hollow fiber membranes 11b in the mid-case 11a. Both ends of a bundle of hollow fiber membranes 11b are fixed to potting portions 11c. The potting portions 11c are generally formed by curing a liquid polymer such as a liquid polyurethane resin through a casting scheme.

The air supplied from the outside flows along hollows of the hollow fiber membranes 11b. The off-gas flowing into the mid-case 11a through the off-gas inlet 11aa comes into contact with outer surfaces of the hollow fiber membranes 11b, and then, is discharged from the mid-case 11a through the off-gas outlet 11ab. When the off-gas comes into contact with the outer surfaces of the hollow fiber membranes 11b, moisture contained in the off-gas permeates the hollow fiber membranes 11b to humidify the gas flowing along the hollows of the hollow fiber membranes 11b.

The potting portion 11c to which ends of the plurality of hollow fiber membranes 11b are fixed, and a resin layer 11d between the potting portion 11c and the mid-case 11a block the inner spaces of the caps 12 and the inner space of the mid-case 11a. The resin layer lid is generally formed by curing a liquid polymer such as liquid polyurethane resin through a casting scheme, similar to the potting portion 11c.

Meanwhile, an off-gas flowing into the inside through the off-gas inlet 11aa is a relatively high-pressure off-gas, and the hollow fiber membranes lib comes into direct contact with the relatively high-pressure off-gas, which causes a problem that the hollow fiber membranes in a portion coming into contact with the off-gas due to the pressure of the off-gas are damaged.

A case in which the selective permeable membrane is the hollow fiber membrane has been illustrated above, but even when the selective permeable membrane is a flat membrane made of a membrane sheet, there is a problem in that the flat membrane is also damaged due to direct contact with a high-pressure off-gas. JP 2007 218539 A relates to a hollow fiber membrane module composed of a bundle of hollow fiber membranes, which is accommodated within a container. US 8 308 943 B2 relates to a technique of transporting a fluid component between fluids with hollow fiber membranes. US 2012/270120 A1 relates to a humidifier for fuel cell. US 2014/183126 A1 relates to an end member for a spiral separation membrane element. JP 2004 202478 A relates to a membrane module.

### [Disclosure]

### [Technical Problem]

An object of the present invention is to provide a fuel cell membrane humidifier capable of preventing humidification membranes in a portion coming into contact with an off-gas due to the pressure of the off-gas from being damaged.

### [Technical Solution]

The invention is specified by the independent claim. Preferred embodiments are defined in the dependent claims. In the following description, although numerous features may be designated as optional, it is nevertheless acknowledged that all features comprised in the independent claim are not to be read as optional.

A fuel cell membrane humidifier according to an embodiment of the present invention includes
a humidification module configured to humidify air supplied from the outside with moisture in an off-gas discharged from a fuel cell stack; and caps coupled to both ends of the humidification module, respectively, wherein the humidification module may include a mid-case having an off-gas inlet, the off-gas flowing into the inside through the off-gas inlet; at least one cartridge disposed inside the mid-case and configured to accommodate a plurality of humidification membranes; and a humidification membrane protection member formed to be inclined toward the cartridge on an inner wall of the mid-case having the off-gas inlet formed therein, to prevent the off-gas from come into direct contact with the humidification membranes.

In the fuel cell membrane humidifier according to the embodiment of the present invention, the humidification membrane protection member may include a protection member body formed to be inclined at the preset angle toward the cartridge on the inner wall of the mid-case; and at least one flow hole formed in the protection member body.

In the fuel cell membrane humidifier according to the embodiment of the present invention, the flow hole may be formed not to be parallel to a direction of the off-gas inlet.

In the fuel cell membrane humidifier according to the embodiment of the present invention, the flow hole may be formed to be perpendicular to a direction of the protection member body.

In the fuel cell membrane humidifier according to the embodiment of the present invention, the humidification membrane may be a hollow fiber membrane formed of a hollow membrane having an empty inside or a flat membrane formed of a pair of opposing membrane sheets.

In the fuel cell membrane humidifier according to the embodiment of the present invention, the cartridge may accommodate a plurality of hollow fiber membranes, the fuel cell membrane humidifier may further include a gasket assembly airtightly coupled to each end of the humidification module through mechanical assembly, and the gasket assembly may include a packing portion configured to have a hole, an end of the cartridge being inserted into the hole, and come into close contact with the end of the cartridge inserted into the hole to absorb a vibration in a horizontal direction; an edge portion formed to be connected to the packing portion and interposed in a space formed by a groove formed at an end of the mid-case and an end of the cap; and a sealing portion formed between the cartridge and the packing portion to come into contact with the cartridge and the packing portion.

In the fuel cell membrane humidifier according to the embodiment of the present invention, the packing portion may include a body member having a hole formed therein, an end of the cartridge being inserted into the hole; and a protrusion member formed at one end of the body member and in close contact with the end of the cartridge inserted into the hole.

In the fuel cell membrane humidifier according to the embodiment of the present invention, the cartridge may include an inner case having openings formed at ends thereof, the plurality of hollow fiber membranes being accommodated in the inner case; and potting portions configured to close the openings of the inner case, ends of the plurality of hollow fiber membranes being fixed to the potting portion.

In the fuel cell membrane humidifier according to the embodiment of the present invention, at least a part of the potting portion may be located outside the inner case, and the protrusion member may be pressed against and come in close contact with the potting portion.

In the fuel cell membrane humidifier according to the embodiment of the present invention, the entire potting portion may be located inside the inner case, and the protrusion member may be pressed against and come in close contact with the inner case.

In the fuel cell membrane humidifier according to the embodiment of the present invention, the edge portion may include edge wings protruding in both directions, and the edge wings may be interposed with the groove formed at the end of the mid-case filled with the edge wings to seal the inside and outside of the mid-case, the mid-case, and the cap.

In the fuel cell membrane humidifier according to the embodiment of the present invention, each of the packing portion and the edge portion may have a first hardness of 30 to 70 Shore A, and the fuel cell membrane humidifier may further include a reinforcing member formed to be inserted into at least a part of the packing portion and at least a part of the edge portion, the reinforcing member having a second hardness higher than the first hardness.

Other specific matters of implementation examples according to various aspects of the present invention are included in the detailed description below.

### [Advantageous Effects]

According to the present invention, it is possible to prevent the humidification membranes from being damaged due to the pressure of the off-gas.

### [Description of Drawings]

FIG. 1 is an exploded perspective view illustrating a fuel cell membrane humidifier according to the related art.
FIG. 2 is an exploded perspective view illustrating a fuel cell membrane humidifier according to a first embodiment of the present invention.
FIG. 3 is an exploded cross-sectional view illustrating the fuel cell membrane humidifier according to the first embodiment of the present invention.
FIG. 4 is a combined cross-sectional view of the fuel cell membrane humidifier according to the first embodiment of the present invention.
FIG. 5 is a partial cross-sectional view illustrating an operating state of the fuel cell membrane humidifier according to the first embodiment of the present invention.
FIG. 6 is a combined cross-sectional view illustrating a fuel cell membrane humidifier according to a modification example of the first embodiment of the present invention.
FIG. 7 is an exploded perspective view illustrating a fuel cell membrane humidifier according to a second embodiment of the present invention.
FIG. 8 is an exploded cross-sectional view illustrating the fuel cell membrane humidifier according to the second embodiment of the present invention.
FIG. 9 is a combined cross-sectional view illustrating the fuel cell membrane humidifier according to the second embodiment of the present invention.
FIG. 10 is a combined cross-sectional view illustrating a fuel cell membrane humidifier according to a modification example of the second embodiment of the present invention.

### [Mode for Disclosure]

Since various changes may be made to the present invention, which may have several embodiments, specific embodiments will be illustrated and described in detail herein. However, it will be understood that this is not intended to limit the present invention to the specific embodiments, and all changes, equivalents, or substitutions included in the spirit and scope of the present invention are included.

The terms used herein are used for the purpose of describing specific embodiments only and are not intended to limit the present invention. The singular expressions "a," "an" and "the" include the plural expressions, unless the context clearly indicates otherwise. It will be understood that the terms "include" or "have" herein specify the presence of features, numbers, steps, operations, components, parts or combinations thereof described herein, but do not preclude the presence or addition of one or more other features, numbers, steps, operations, components, parts or combinations thereof. Hereinafter, a fuel cell membrane humidifier preventing damage to a humidification membrane according to embodiments of the present invention will be described with reference to the drawings.

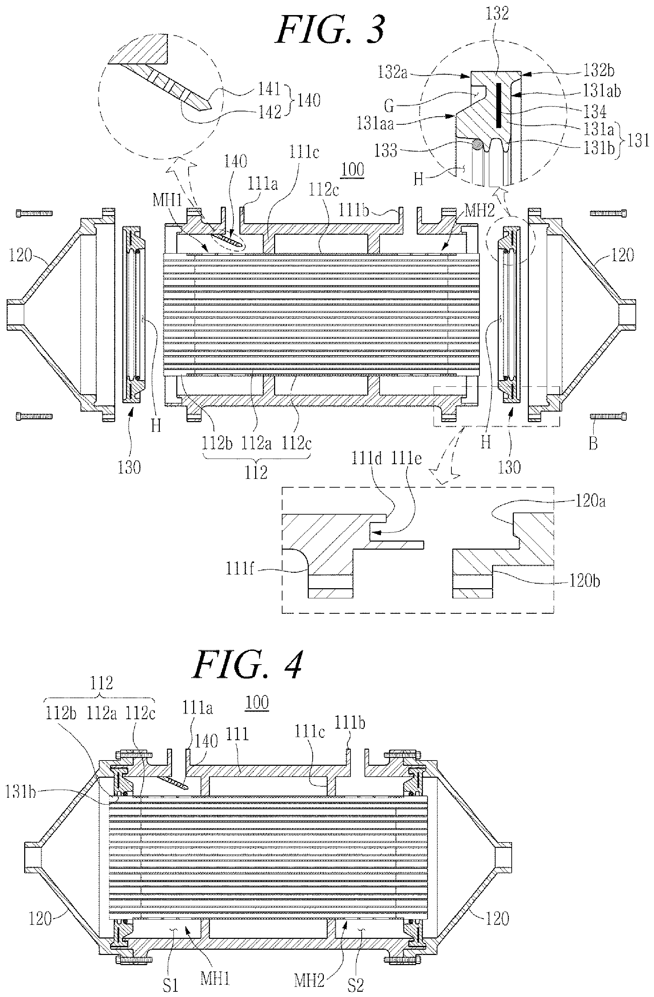

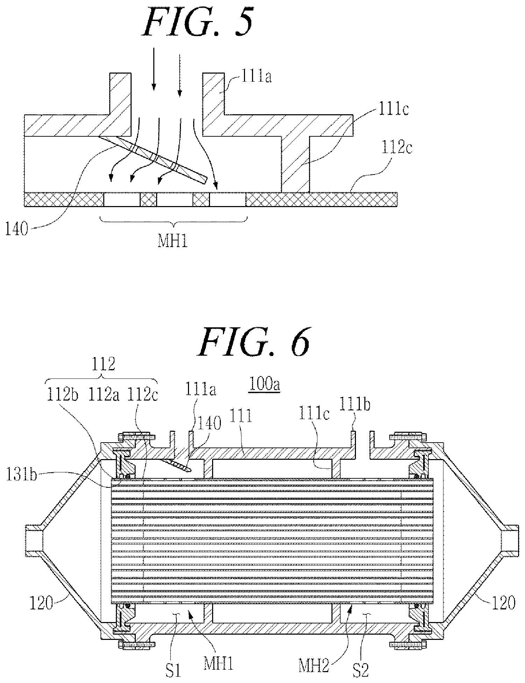

FIG. 2 is an exploded perspective view illustrating a fuel cell membrane humidifier according to a first embodiment of the present invention, FIG. 3 is an exploded cross-sectional view illustrating the fuel cell membrane humidifier according to the first embodiment of the present invention, FIG. 4 is a combined cross-sectional view of the fuel cell membrane humidifier according to the first embodiment of the present invention, and FIG. 5 is a partial cross-sectional view illustrating an operating state of the fuel cell membrane humidifier according to the first embodiment of the present invention.

Referring to FIGS. 2 to 5, the fuel cell membrane humidifier 100 according to the first embodiment of the present invention includes a humidification module 110, caps 120, a gasket assembly 130, and a humidification membrane protection member 140.

The humidification module 110 humidifies air supplied from the outside with moisture in an off-gas discharged from a fuel cell stack. Both ends of the humidification module 110 are coupled to the caps 120. One of the caps 120 supplies the air supplied from the outside to the humidification module 110, and the other supplies the air humidified by the humidification module 110 to the fuel cell stack. The gasket assembly 130 is airtightly coupled to each end of the humidification module 110 through mechanical assembly. The humidification membrane protection member 140 prevents the humidification membrane from being damaged due to direct contact of the off-gas flowing into the inside through the off-gas inlet 111a with the humidification membrane.

The humidification membranes are roughly classified into hollow fiber membranes and flat membranes. The hollow fiber membrane is a hollow membrane having an empty inside, and a gas flows through a hollow channel. The flat membrane is formed of a pair of opposing membrane sheets, and a spacer is disposed between the pair of membrane sheets to form a channel while preventing the membrane sheets from coming into contact with each other. The gas flows through the channel between the membrane sheets. Hereinafter, an example in which the humidification membrane is a hollow fiber membrane will be described, but the same may apply to a case in which the humidification membrane is the flat membrane.

The humidification module 110 is a device in which moisture exchange between the air supplied from the outside and an off-gas occurs, and may include a mid-case 111 having an off-gas inlet 111a and an off-gas outlet 111b, and at least one cartridge 112 disposed in the mid-case 111.

The mid-case 111 and the cap 120 may be independently formed of hard plastic or metal, and may have a cross section in a width direction having a circular or polygonal shape. The "circular shape" includes an oval shape, and the "polygonal shape" includes a polygonal shape with rounded corners. Examples of the hard plastic may include polycarbonate, polyamide (PA), polyphthalamide (PPA), and polypropylene (PP). The inner space of the mid-case 111 may be partitioned into a first space S1 and a second space S2 by partition walls 111c.

The cartridge 112 may include a plurality of hollow fiber membranes 112a and a potting portion 112b that fixes the hollow fiber membranes 112a to each other. Ends of the hollow fiber membranes 112a may be fixed to the potting portion 112b.

Further, the cartridge 112 may further include an inner case 112c. The inner case 112c has an opening at each end, and the hollow fiber membranes 112a are accommodated therein. The potting portion 112b in which ends of the hollow fiber membranes 112a are potted closes the openings of the inner case 112c.

As in FIG. 3, at least a part of the potting portion 112b may be located outside the inner case 112c, and a protrusion member 131b of the gasket assembly 130 may come into close contact with the potting portion 112b. Alternatively, as in FIG. 6, the entire potting portion 112b may be located inside the inner case 112c and the protrusion member 131b of the gasket assembly 130 may come into close contact with the inner case 112c rather than the potting portion 112b.

The inner case 112c includes a plurality of holes (hereinafter referred to as 'first mesh holes') MH1 arranged in a mesh form for fluid communication with the first space S1, and a plurality of holes (hereinafter referred to as 'second mesh holes') MH2 arranged in a mesh form for fluid communication with the second space S2.

An off-gas flowing into the first space S1 of the mid-case 111 through the off-gas inlet 111a flows into the inner case 112c through the first mesh holes MH1 and comes into contact with outer surfaces of the hollow fiber membranes 22. Subsequently, the off-gas deprived of moisture exits into the second space S2 through the second mesh hole MH2, and then, is discharged from the mid-case 111 through the off-gas outlet 111b. Such a cartridge 112 including the inner case 112c has an advantage that the cartridge 112 can be easily assembled to the mid-case 111 and can be easily replaced.

The hollow fiber membranes 112a may include a polymer membrane formed of a polysulfone resin, a polyethersulfone resin, a sulfonated polysulfone resin, a polyvinylidene fluoride (PVDF) resin, a polyacrylonitrile (PAN) resin, a polyimide resin, a polyamideimide resin, a polyesterimide resin, or a mixture of two or more of these, and the potting portions 112b may be formed by curing a liquid resin such as a liquid polyurethane resin through a casting scheme such as deep potting or centrifugal potting.

The gas supplied from the outside flows along hollows of the hollow fiber membranes 112a. The off-gas flowing into the mid-case 111 through the off-gas inlet 111a comes into contact with outer surfaces of the hollow fiber membranes 112a and then is discharged from the mid-case 111 through the off-gas outlet 111b. When the off-gas comes into contact with the outer surfaces of the hollow fiber membranes 112a, moisture contained in the off-gas permeates the hollow fiber membranes 112a to humidify the air flowing along the hollows of the hollow fiber membranes 112a.

The gasket assembly 130 may be airtightly coupled to each end of the humidification module 110 through mechanical assembly. Since air leakage between the mid-case 111 and the cap 120 is prevented through mechanical assembly of the gasket assembly 130, a casting process (that is, a process of injecting a liquid resin into a mold and curing the liquid resin), an additional sealing process (that is, a process of applying and curing a sealant), and the like of the related art can be omitted.

Further, the gasket assembly 130 is mounted on the humidification module 100 through mechanical assembly, and thus, when an abnormality occurs in a specific part (for example, the cartridge 112) of the humidification module 110, it is possible to simply mechanically separate the gasket assembly 130 from the humidification module 110, and then repair or replace only the part.

Referring to FIG. 3, the gasket assembly 130 includes a packing portion 131, an edge portion 132, and a sealing portion 133. The packing portion 131 and the edge portion 132 may be formed of an elastic material (for example, silicone or rubber) having a first hardness of 20 to 70 Shore A and, preferably, 30 to 60 Shore A. The sealing portion 133 may include at least one of a solid sealing material and a liquid sealing material. The solid sealing material may be made of a material such as silicone, acrylic rubber, EPDM, or NBR, and the liquid sealing material may be made of a material such as silicone or urethane.

The packing portion 131 includes a hole H into which the end (for example, the potting portion 112b) of the cartridge 112 is inserted, and is interposed between the mid-case 111 and the cartridge 112. The packing portion 131 includes a body member 131a and the protrusion member 131b.

The body member 131a includes a hole H into which the end (for example, the potting portion 112b) of the cartridge 112 is inserted, and the hole H is formed in a shape corresponding to that of the end of the cartridge 112. A lower body member 131aa formed to protrude from the body member 131a to the mid-case 111 may have a cross section formed in a polygonal shape (for example, a trapezoidal shape), and an upper body member 131ab formed toward the cap 120 may be formed in a planar shape. A space in which the sealing portion 133 is disposed is formed between the lower body member 131aa and the cartridge potting portion 112b. Further, a groove G into which an end 111d of the mid-case 111 is fitted is formed between the lower body member 131aa and the edge portion 132.

The protrusion member 131b is formed at one end of the body member 131a to come into contact with the cartridge potting portion 112b inserted into the hole H. The protrusion member 131b may be at least one annular protrusion protruding from the one end of the body member 131a. The protrusion member 131b may press and come into contact with the cartridge potting portion 112b according to an elastic force to make a space of the mid-case 111 and a space of the cap 120 airtight. Therefore, the protrusion member 131b can prevent a fluid in the mid-case 111 from flowing into the space formed on the cap 120 side. Further, since the protrusion member 131b has elasticity, the protrusion member 131b can perform a vibration dampening function, and thus, prevent the humidifier 100 from being damaged by a vibration.

The edge portion 132 is formed at the other end of the body member 131a. The edge portion 132 may be interposed in a space formed by a groove 111e formed at an end of the mid-case and an end 120a of the cap. The edge portion 132 may include edge wings 132a and 132b protruding in both directions. The edge wings 132a and 132b may be formed in a longitudinal direction of the humidification module 110. When assembling is performed, the edge wings 132a and 132b are inserted into the groove 111e at the end of the mid-case, the edge wing 132b is pressed by the end 120a of the cap, and then, assembly may be performed by fastening using a fastening means such as a bolt B. In this case, since the edge wings 132a and 132b are made of an elastic material, the edge wings 132a and 132b may be interposed with a space of the groove 111e at the end of the mid-case partially filled with the edge wings 132a and 132b. Fastening fragments 111f and 120b having fastening holes for bolt fastening may be formed on side surfaces of ends of the mid-case 111 and the cap 120. The edge wings 132a and 132b may make the groove 111e at the end of the mid-case airtight to seal the inside and outside of the mid-case 111, and the mid-case 111, and the cap 120.

The sealing portion 133 is formed between the cartridge 112 and the packing portion 131 to come into contact with the cartridge 112 and the packing portion 131. Specifically, the sealing portion 133 is formed to simultaneously come into contact with (or adhere to) the potting portion 112b of the cartridge and the lower body member 131aa of the packing portion. The sealing portion 133 makes the space of the mid-case 111 and the space of the cap 120 airtight to prevent a fluid in the mid-case 111 from flowing toward the cap 120.

Further, the gasket assembly 130 may further include a reinforcing member 134. The reinforcing member 134 may have a second hardness higher than the first hardness. For example, the reinforcing member 134 may be formed of metal, a thermoplastic or thermosetting resin, or the like. The reinforcing member 134 may be formed to be inserted into the gasket assembly 130 by being manufactured after a metal plate is inserted into a mold at the time of molding of the gasket assembly 130. The reinforcing member 134 may be formed to be inserted into at least a part of the packing portion 131 and at least a part of the edge portion 132. The reinforcing member 134 may be formed at a portion of the gasket assembly 130 that is vulnerable to deformation (a portion in which the groove G is formed). The reinforcing member 134 having a hardness higher than the packing portion 131 and the edge portion 132 can prevent the body member 131a from being deformed when the gasket assembly 130 is mechanically assembled into the humidification module 110 or while the humidifier is operating, to suppress air leakage more reliably.

The humidification membrane protection member 140 may be formed to be inclined at a preset angle toward the cartridge 112 on an inner wall of the mid-case 111 in which the off-gas inlet 111a is formed.

Referring to FIG. 5, the off-gas flowing into the inside through the off-gas inlet 111a may flow into the first mesh holes MH1 while being guided by the humidification membrane protection member 140. Since the off-gas primarily collides with the humidification membrane protection member 140 to lose some pressure, and then, flows into the first mesh holes MH1, the hollow fiber membranes accommodated inside the cartridge 112 come into contact with the off-gas subjected to the pressure loss. Therefore, the humidification membrane protection member 140 can prevent the off-gas flowing into the inside through the off-gas inlet 111a from coming into direct contact with the hollow fiber membranes and damaging the hollow fiber membranes.

Specifically, the humidification membrane protection member 140 may include a protection member body 141 formed to be inclined at the preset angle toward the cartridge 112 on the inner wall of the mid-case 111, and a predetermined number of flow holes 142 formed in the protection member body 141. The flow holes 142 are not essential. That is, it is possible to prevent the hollow fiber membranes from being damaged only with the protection member body 141. However, when there is only the protection member body 141, there is a concern that the pressure loss of the off-gas is excessive, and thus, when the flow holes 142 are optionally formed, it is possible to reduce the pressure loss of the off-gas while preventing the hollow fiber membranes from being damaged by the off-gas, and improve the humidification efficiency. In this case, when directions of the flow holes 142 are parallel to a direction of the off-gas inlet 111a, a high-pressure off-gas comes into direct contact with the hollow fiber membranes, and thus, it is preferable for the flow holes 142 to be formed so that the directions of the flow holes 142 are not parallel to the direction of the off-gas inlet 111a. More preferably, the direction of the flow hole 142 may be perpendicular to a direction of the protection member body 141.

FIG. 6 is a combined cross-sectional view illustrating a fuel cell membrane humidifier according to a modification example of the first embodiment of the present invention. Referring to FIG. 6, the fuel cell membrane humidifier 100a according to the modification example of the first embodiment of the present invention is substantially the same as the fuel cell membrane humidifier 100 according to the first embodiment described above except that the entire potting portion 112b is located inside the inner case 112c, and the protrusion member 131b of the gasket assembly 130 comes into close contact with the inner case 112c rather than the potting portion 112b.

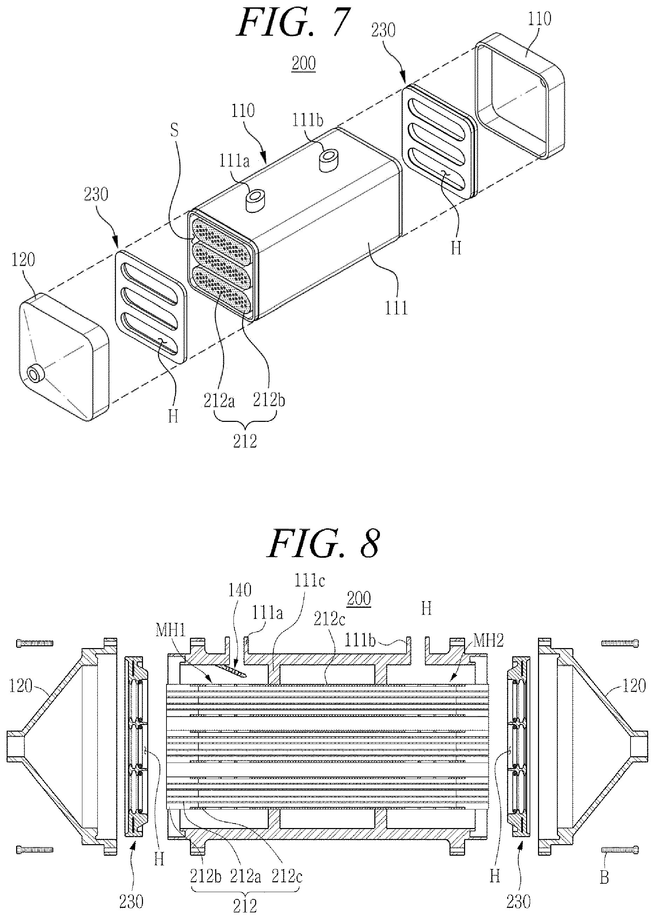

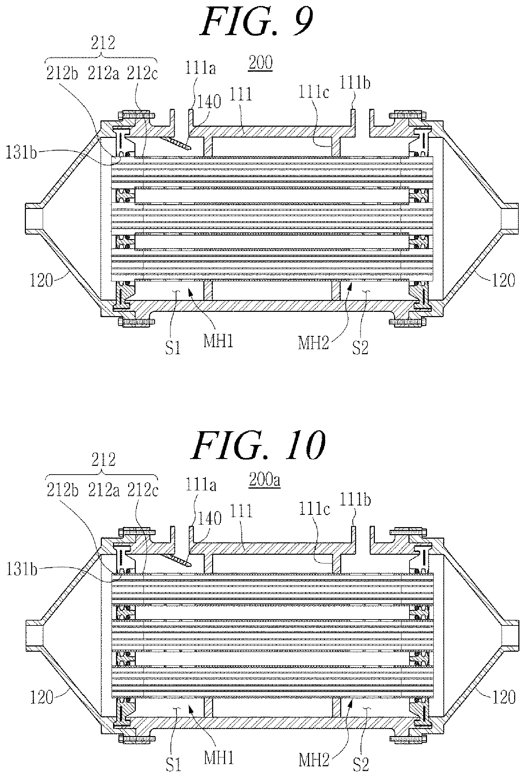

Next, a fuel cell membrane humidifier according to a second embodiment of the present invention will be described with reference to FIGS. 7 to 9. FIG. 7 is an exploded perspective view illustrating the fuel cell membrane humidifier according to the second embodiment of the present invention, FIG. 8 is an exploded cross-sectional view illustrating the fuel cell membrane humidifier according to the second embodiment of the present invention, and FIG. 9 is a combined cross-sectional view illustrating the fuel cell membrane humidifier according to the second embodiment of the present invention.

As illustrated in FIGS. 7 to 9, the fuel cell membrane humidifier 200 according to the second embodiment of the present invention is substantially the same as the fuel cell membrane humidifier 100 according to the first embodiment described above except that (i) the humidification module 110 includes two or more cartridges 212, and (ii) the gasket assembly 230 includes two or more holes H into which the two or more cartridges 212 are inserted.

In this case, the gasket assembly 230 may include two or more protrusion members 131b (see FIG. 3) formed at one end of the body member 131a (see FIG. 3) to come into contact with a cartridge potting portion 212b, and two or more sealing portions 133 (see FIG. 3) formed between the cartridge 212 and the packing portion 131 (see FIG. 3) to come into contact with the cartridge 212 and the packing portion 131.

A plurality of cartridges 212 each including an inner case 212c are mounted inside the mid-case 111 at regular intervals, making it possible not only to uniformly distribute the off-gas to all hollow fiber membranes 212a present inside the mid-case 111, but also to selectively replace only a specific cartridge 212 in which a problem occurs, thereby further reducing maintenance costs of the fuel cell membrane humidifier 200.

FIG. 10 is a combined cross-sectional view illustrating a fuel cell membrane humidifier according to a modification example of the second embodiment of the present invention. Referring to FIG. 10, the fuel cell membrane humidifier 200a according to the modification example of the second embodiment of the present invention is substantially the same as the fuel cell membrane humidifier 200 according to the second embodiment described above except that the entire potting portion 212b is located inside the inner case 212c, and the protrusion member of the gasket assembly 230 comes into close contact with the inner case 212c rather than the potting portion 212b.

Although the embodiment of the present invention has been described above, those skilled in the art can variously modify or change the present invention through affixation, change, deletion, addition, or the like of components without departing from the spirit of the present invention described in the claims, and this will be said to be also included within the scope of the present invention.

### [Detailed Description of Main Elements]

100, 100a, 200, 200a: fuel cell membrane humidifier
110: humidification module 111: mid-case
111a: off-gas inlet 111b: off-gas outlet
111c: partition wall 112, 212: cartridge
112a, 212a: hollow fiber membrane 112b, 212b: potting portion
112c, 212c: inner case 120: cap
130, 230: gasket assembly
140: humidification membrane protection member 141: protection member body
142: flow hole

## Claims

1. A fuel cell membrane humidifier comprising:
a humidification module configured to humidify air supplied from the outside with moisture in an off-gas discharged from a fuel cell stack; and
caps coupled to both ends of the humidification module, respectively,
wherein the humidification module includes
a mid-case having an off-gas inlet, the off-gas flowing into the inside through the off-gas inlet;
at least one cartridge disposed inside the mid-case and configured to accommodate a plurality of humidification membranes; and
a humidification membrane protection member formed to be inclined toward the cartridge on an inner wall of the mid-case having the off-gas inlet formed therein, to prevent the off-gas from coming into direct contact with the humidification membranes,
wherein the cartridge includes an inner case (112c), the inner case (112c) has an opening at each end, and the hollow fiber membranes (112a) are accommodated therein, wherein the potting portion (112b) in which ends of the hollow fiber membranes (112a) are potted closes the openings of the inner case (112c),
wherein the inner case (112c) includes a plurality of holes, i.e. first mesh holes (MH1), arranged in a mesh form for fluid communication with a first space (S1), and a plurality of holes, i.e. second mesh holes (MH2), arranged in a mesh form for fluid communication with a second space (S2),
wherein the humidifier is configured such that an off-gas flowing into the first space (S1) of the mid-case (111) through the off-gas inlet (111a) flows into the inner case (112c) through the first mesh holes (MH1) and comes into contact with outer surfaces of the hollow fiber membranes (22), subsequently, the off-gas deprived of moisture exits into the second space (S2) through the second mesh hole (MH2), and then, is discharged from the mid-case (111) through the off-gas outlet (111b),
wherein the humidification membrane protection member includes a protection member body formed to be inclined at the preset angle toward the cartridge on the inner wall of the mid-case; and flow holes formed in the protection member body,
wherein the flow holes are formed to be perpendicular to a direction of the protection member body.

2. The fuel cell membrane humidifier of claim 1, wherein the at least one flow hole is formed to be perpendicular to a direction of the protection member body.

3. The fuel cell membrane humidifier of claim 1, wherein the humidification membrane is a hollow fiber membrane formed of a hollow membrane having an empty inside or a flat membrane formed of a pair of opposing membrane sheets.

## Patentansprüche

1. Brennstoffzellenmembranbefeuchter, aufweisend:
ein Befeuchtungsmodul, das dafür konfiguriert ist, von außen zugeführte Luft mit Feuchtigkeit in einem von einem Brennstoffzellenstapel abgegebenen Abgas zu befeuchten; und
Kappen, die jeweils mit einem der beiden Enden des Befeuchtungsmoduls verbunden sind,
wobei das Befeuchtungsmodul aufweist:
ein Mittelgehäuse mit einem Abgaseinlass, wobei das Abgas durch den Abgaseinlass in das Innere strömt;
mindestens eine Kartusche, die im Inneren des Mittelgehäuses angeordnet und dafür konfiguriert ist, eine Vielzahl von Befeuchtungsmembranen aufzunehmen; und
ein Befeuchtungsmembranschutzelement, das derart ausgebildet ist, dass es auf einer Innenwand des Mittelgehäuses, in der der Abgaseinlass ausgebildet ist, zur Kartusche hin geneigt ist, um zu verhindern, dass das Abgas in direkten Kontakt mit den Befeuchtungsmembranen kommt,
wobei die Kartusche ein Innengehäuse (112c) aufweist, das Innengehäuse (112c) an jedem Ende eine Öffnung aufweist und Hohlfasermembranen (112a) darin aufgenommen sind, wobei ein Vergussabschnitt (112b), in dem die Enden der Hohlfasermembranen (112a) vergossen sind, die Öffnungen des Innengehäuses (112c) verschließt,
wobei das Innengehäuse (112c) eine Vielzahl von Löchern aufweist, nämlich erste Maschenlöcher (MH1), die in einer Gitterform angeordnet sind, um eine Fluidverbindung mit einem ersten Raum (S1) herzustellen, sowie eine Vielzahl von Löchern, nämlich zweite Maschenlöcher (MH2), die in einer Gitterform angeordnet sind, um eine Fluidverbindung mit einem zweiten Raum (S2) herzustellen,
wobei der Befeuchter dafür konfiguriert ist, dass ein Abgas, das über den Abgaseinlass (111a) in den ersten Raum (S1) des Mittelgehäuses (111) strömt, durch die ersten Maschenlöcher (MH1) in das Innengehäuse (112c) strömt und mit Außenflächen der Hohlfasermembranen (22) in Kontakt kommt, woraufhin das entfeuchtete Abgas durch die zweiten Maschenlöcher (MH2) in den zweiten Raum (S2) austritt und anschließend über den Abgasauslass (111b) aus dem Mittelgehäuse (111) abgeführt wird,
wobei das Befeuchtungsmembranschutzelement einen Schutzelementkörper aufweist, der derart ausgebildet ist, dass er unter einem voreingestellten Winkel in Richtung zur Kartusche auf der Innenwand des Mittelgehäuses geneigt ist, und wobei im Schutzelementkörper Durchflusslöcher ausgebildet sind,
wobei die Durchflusslöcher senkrecht zu einer Richtung des Schutzelementkörpers ausgebildet sind.

2. Brennstoffzellenmembranbefeuchter nach Anspruch 1, wobei das mindestens eine Durchflussloch senkrecht zu einer Richtung des Schutzelementkörpers ausgebildet ist.

3. Brennstoffzellenmembranbefeuchter nach Anspruch 1, wobei die Befeuchtungsmembran eine Hohlfasermembran, die aus einer Hohlmembran mit einem hohlen Inneren gebildet ist, oder eine Flachmembran ist, die aus einem Paar gegenüberliegender Membranlagen gebildet ist.

## Revendications

1. Humidificateur à membrane de pile à combustible comprenant :
un module d'humidification configuré pour humidifier l'air provenant de l'extérieur au moyen de l'humidité contenue dans un effluent gazeux évacué d'un empilement de piles à combustible ; et
des capuchons couplés chacun á l'une des extrémités du module d'humidification,
dans lequel le module d'humidification comprend :
un boîtier intermédiaire ayant une entrée d'effluent gazeux, l'effluent gazeux s'écoulant à l'intérieur par l'entrée d'effluent gazeux ;
au moins une cartouche disposée à l'intérieur du boîtier intermédiaire et configurée pour loger une pluralité de membranes d'humidification ; et
un élément de protection de membrane d'humidification formé pour être incliné vers la cartouche sur une paroi interne du boîtier intermédiaire comportant l'entrée d'effluent gazeux formée dans ce dernier, pour empêcher l'effluent gazeux de venir en contact direct avec les membranes d'humidification,
dans lequel la cartouche comprend un boîtier interne (112c), le boîtier interne (112c) a une ouverture à chaque extrémité, et les membranes à fibres creuses (112a) y sont logées, dans lequel la partie d'enrobage (112b) dans laquelle les extrémités des membranes à fibres creuses (112a) sont enrobées, ferme les ouvertures du boîtier interne (112c),
dans lequel le boîtier interne (112c) comprend une pluralité de trous, c'est-à-dire des premiers trous de maille (MH1), agencés sous la forme de maille, pour permettre la communication fluidique avec un premier espace (S1), et une pluralité de trous, c'est-à-dire des deuxièmes trous de maille (MH2), agencés sous la forme de maille pour permettre la communication fluidique avec un deuxième espace (S2),
dans lequel l'humidificateur est configuré de sorte qu'un effluent gazeux s'écoulant dans le premier espace (S1) du boîtier intermédiaire (111) par l'entrée d'effluent gazeux (111a) s'écoule dans le boîtier interne (112c) par les premiers trous de maille (MH1) et vient en contact avec des surfaces externes des membranes à fibres creuses (22), ensuite, l'effluent gazeux dépourvu d'humidité sort dans le deuxième espace (S2) par le deuxième trou de maille (MH2), et ensuite, est déchargé du boîtier intermédiaire (111) par la sortie d'effluent gazeux (111b),
dans lequel l'élément de protection de membrane d'humidification comprend un corps d'élément de protection formé pour être incliné selonun angle prédéterminé vers la cartouche sur la paroi interne du boîtier intermédiaire ; et des trous d'écoulement formés dans le corps d'élément de protection,
dans lequel les trous d'écoulement sont formés pour être perpendiculaires à une direction du corps d'élément de protection.

2. Humidificateur à membrane de pile à combustible selon la revendication 1, dans lequel le au moins un trou d'écoulement est formé pour être perpendiculaire à une direction du corps d'élément de protection.

3. Humidificateur à membrane de pile à combustible selon la revendication 1, dans lequel la membrane d'humidification est une membrane à fibres creuses formée avec une membrane creuse comportant un vide à l'intérieur ou une membrane plate formée avec une paire de feuilles de membrane opposées.
